# EUROPÄISCHE PATENTSCHRIFT

(11) **EP 2 371 194 B1**
(45) Veröffentlichungstag und Bekanntmachung des Hinweises auf die Patenterteilung: **03.04.2013**
(21) Anmeldenummer: 11000835.6
(22) Anmeldetag: 03.02.2011
(51) Int. Cl.: A01B 73/06

(54) **Vorrichtung zum Verteilen von Saatgut und/oder Dünger**
Device for spreading seeds and/or fertilisers
Dispositif de répartition de semences et/ou d'engrais

(30) Priorität: 30.03.2010 DE 102010013470
(43) Veröffentlichungstag der Anmeldung: 05.10.2011
(73) Patentinhaber: Kverneland A/S, 4355 Kvernaland (NO)
(72) Erfinder: Schumacher, Ferdinand, 59510 Lippetal-Oestinghausen (DE)
(74) Vertreter: Schweiger, Johannes

(56) Entgegenhaltungen:
- EP-A2- 0 114 983
- EP-A2- 0 135 180
- EP-A2- 2 055 169
- US-A- 5 113 956
- US-A1- 2006 090 910
- US-A1- 2009 064 910

## Beschreibung

Die Erfindung betrifft eine Vorrichtung zum Verteilen von Saatgut und/oder Dünger gemäß Patentanspruch 1.

Grundsätzlich bestehen solche Vorrichtungen aus einem Grundrahmen und/oder Basisgestell, das einen Vorratsbehälter für Saatgut/Dünger mit möglichst großem Volumen trägt oder bei dem die Saatgutbehälter jedem Säschar zugeordnet sind. An dem Basisgestell sind quer zur Fahrtrichtung Säelemente, beispielsweise Säschare an einem Säelementschienenrahmen aufgereiht, wobei der Säelementschienenrahmen zum Transport in eine der Straßenverkehrsordnung entsprechende Transportstellung zusammengeklappt/-geschwenkt werden muss, wenn die Arbeitsbreite größer als die zulässige Transportbreite ist. Zur Zeit müssen in einigen Ländern eine maximale Höhe von vier Metern und eine maximale Breite von drei Metern eingehalten werden.

Die Vorrichtung zum Verteilen von Saatgut und/oder Dünger kann zum Anbau im Dreipunkt des Schleppers oder als Anhängemaschine mit eigenem Fahrwerk ausgeführt sein.

Die Säelemente sind am Säelementschienenrahmen schwenkbar angeschlagen und können über mit dem Säelementschienenrahmen verbundene Zugfedern eine Vorspannung in Richtung des Ackerbodens aufweisen, so dass die Säelemente bei der Bestellung des Ackers nicht nur durch ihr Eigengewicht in diesen eindringen. Die Vorspannung der Zugfedern kann durch einen Mechanismus verstellt werden. Der Mechanismus kann verstellt werden, um unterschiedlich hohe Säelementdrücke bzw. Säelementkräfte in Richtung des Ackerbodens zu erreichen und damit die Ablagetiefe des Saatguts und/oder Düngers zu beeinflussen. Die Säelemente weisen meist Andruck-/Tiefenführungsrollen auf, wodurch die maximale Eindringtiefe in den Boden definiert wird. Die Eindringkraft / der Säelementdruck, die/der zum Überwinden der entsprechenden Gegenkraft des Bodens erforderlich ist, hängt unter anderem von der Beschaffenheit des Bodens, der Geometrie der Säelemente sowie der Fahrgeschwindigkeit ab.

Die oben beschriebenen pneumatischen Verteilmaschinen weisen - wie gesagt - erhebliche Arbeitsbreiten auf, die das zulässige Maß (Höhe: 4m; Breite: 3m) zum Teil deutlich überschreiten und daher nach Bearbeitung des Ackerbodens entsprechend zusammengeklappt werden müssen.

Die US 4,319,643 beschreibt ein landwirtschaftliches Gerät mit einem Hauptbalken und zwei Seitenflügeln, die von einer Arbeits- in eine Transportstellung bei teleskopartiger Längenanpassung des Hauptbalkens über je einen Hydraulikzylinder und je eine an den Seitenflügeln angebrachte Stange geklappt werden können.

Häufig werden aber auch, wie beispielsweise bei der WO 2004/017710 A1 im mittleren Bereich der Arbeitsbreite direkt an einem am schlanken Mittelrahmen angeordneten Querträger Einzelkornsäaggregate angebaut. In diesem Bereich sind dann auch Räder angeordnet, die diesen Teil der Maschine bei der Arbeit und die gesamte Maschine beim Straßentransport tragen. Maschinen mit diesem Rahmenkonzept weisen in der Transportstellung in der Regel eine größere Breite auf als sie in den einzelnen Staaten gesetzlich vorgeschrieben ist.

Die US-A-5 113 956 beschreibt ein Gerät mit den Merkmalen der Oberbegriffes des Anspruchs 1.

Aufgabe der vorliegenden Erfindung ist es daher, mit möglichst einfachen und kostengünstigen Mitteln den Klappmechanismus dahingehend zu optimieren, dass einerseits die zulässigen Abmessungen eingehalten werden und andererseits eine optimale Beaufschlagung der Säaggregate für das Eindringen der Säschare in den Boden ermöglicht wird.

Diese Aufgabe wird mit einer Vorrichtung mit den Merkmalen des Anspruchs 1 gelöst. Vorteilhafte Weiterbildungen der Erfindung sind in den Unteransprüchen angegeben. In den Rahmen der Erfindung fallen sämtliche Kombinationen aus zumindest zwei in der Beschreibung, den Ansprüchen und/oder den Figuren offenbarten Merkmalen.

Grundidee der vorliegenden Erfindung ist es dabei, dass trotz der bewährten regenschirmartigen Kinematik die Seitenrahmen nicht direkt am Hauptrahmen schwenkbar fixiert sind, sondern indirekt über jeweils einen Zwischenrahmen, der gemeinsam mit dem jeweiligen Seitenrahmen einen Seitenarm bildet. Zwischen jedem Seitenarm und dem Koppelteil des Hauptrahmens ist für die Umsetzung der Regenschirmkinematik eine Stange vorgesehen. Die erfindungsgemäße Vorrichtung weist demnach einen teleskopierbaren Hauptrahmen auf, an dem, insbesondere eine lotrechte Schwenkachse aufweisende, Klappgelenke zur Anbringung jeweils eines Zwischenrahmens seitlich am Hauptrahmen befestigt sind. Die Zwischenrahmen weisen jeweils an ihrem gegenüberliegenden Ende horizontale, also quer zu den Klappgelenken angeordnete Seitenrahmengelenke auf, an denen die Seitenrahmen an den Zwischenrahmen schwenkbar gelagert sind, insbesondere nach Art einer Balkenwaage, vorzugsweise am Schwerpunkt der Seitenrahmen mit den daran angebrachten Säaggregaten. Vorzugsweise nimmt jeder der beiden Seitenrahmen jeweils die Hälfte der Säaggregate der Vorrichtung auf. In einer alternativen Ausgestaltung ist es erfindungsgemäß denkbar, dass ein Teil der Säaggregate an einem zwischen den Seitenrahmen angeordneten Mittelrahmen angebracht ist, der quer zu dem Hauptrahmen und starr an dem Hauptrahmen angeordnet ist.

An den beiden Seitenrahmen sind jeweils mindestens zwei Laufräder angeordnet, die einen Teil des Gewichts der Vorrichtung in der Arbeitsstellung tragen, der nicht durch die Säaggregate beziehungsweise Säschare oder Düngerschare auf den Boden übertragen wird. Die Laufräder werden außerdem benutzt, um die Vorrichtung am Vorgewende, also beim Wenden der Maschine am Feldrand, auszuheben. In diesem Zustand tragen die Laufräder das vollständige Gewicht der Vorrichtung abzüglich der Stützlast an der Zugmaschine.

Für den Straßentransport ist ein separates Fahrwerk am Hauptrahmen vorgesehen, über das die Vorrichtung komplett ausgehoben werden kann. Die erfindungsgemäße Vorrichtung ermöglicht damit eine in Transportstellung geringe Breite, ohne die Zugmaschine von der Vorrichtung entkoppeln zu müssen, insbesondere auf automatische Weise, beispielsweise durch eine Hydraulik mit entsprechender Hydrauliksteuerung. Auf der anderen Seite ermöglicht es die Erfindung, die Säaggregate möglichst gleichmäßig, also optimal mit einer Kraft in Richtung Ackerboden zu beaufschlagen, insbesondere nach Art einer Balkenwaage für jeden der beiden Seitenrahmen. Darüber hinaus können über die Zwischenrahmen die Massen der am Hauptrahmen angebrachten Teile und die Masse des Hauptrahmens selbst über das Balkenwaagenprinzip auf die Seitenrahmen übertragen werden, so dass eine optimale Beaufschlagung der Säschare sowie eine optimale Eindringtiefe der Säschare gewährleistet wird.

Gemäß einer vorteilhaften Ausführungsform der Erfindung ist vorgesehen, dass die Seitenrahmengelenke jeweils im Bereich des Schwerpunkts des korrespondierenden Seitenrahmens, insbesondere mit den am jeweiligen Seitenrahmen angeordneten Säaggregaten, angeordnet sind. Hierdurch wird die Beaufschlagung der Säaggregate weiter optimiert.

Soweit in Fahrtrichtung F hinter dem Hauptrahmen ein am Hauptrahmen angebrachtes Fahrwerk zum Ausheben der Vorrichtung von einer Sästellung in einer oberen Stellung vorgesehen ist, ist das Fahrwerk als zusätzliche Masse zur Beaufschlagung der Säschare in der Betriebsstellung vorgesehen.

Befindet sich an einer zentralen Stelle auf dem Hauptrahmen ein Vorratsbehälter zur Aufnahme von Saatgut oder Dünger, dann wird dessen Gewicht mit Inhalt ebenfalls über das Balkenwaagenprinzip gleichmäßig zur Beaufschlagung der Säschare genutzt.

Gemäß einer bevorzugten Ausführungsform der Erfindung weist die Vorrichtung eine Arbeitsbreite von mindestens 6m, insbesondere mindestens 9m, vorzugsweise mindestens 12m auf, wobei die erfindungsgemäßen Vorteile insbesondere bei großen Arbeitsbreiten zu Tage treten.

Gemäß einer weiteren vorteilhaften Ausführungsform der Erfindung ist vorgesehen, dass zwischen den beiden Seitenrahmen ein direkt am Aufnahmeteil fixierter Mittelrahmen zur Aufnahme von Säaggregaten vorgesehen ist. Diese Ausführungsform ist insbesondere dann sinnvoll, wenn die Länge der Vorrichtung minimiert werden soll und die Breite in der Transportstellung nicht auf das Minimum reduziert werden muss.

Soweit zwischen dem Aufnahmeteil und den Zwischenrahmen jeweils Klappmittel, insbesondere Hydraulikzylinder, zur Klappung der jeweils korrespondierenden Seitenrahmen von der Arbeitsstellung in die Transportstellung und umgekehrt vorgesehen sind, wird die automatische Steuerung des Klappvorgangs von der Arbeitsstellung in die Transportstellung besonders vereinfacht, insbesondere automatisierbar.

Indem die Stangen jeweils an dem korrespondieren Seitenarm im Bereich des jeweiligen Seitenrahmengelenks angelenkt sind, wird die Kinematik der Klappung der Seitenrahmen optimiert.

Mit Vorteil sind die Stangen jeweils im Bereich eines Koppelpunkts des Koppelteils mit einer Zugmaschine angelenkt, so dass eine Reduzierung der Maximallänge der Vorrichtung auf das Minimum bei optimaler Umsetzung des Regenschirmprinzips ermöglicht wird.

Der Automatisierungsgrad der Klappung ist durch einen Positionssensor zur Erkennung der Sästellung und/oder der oberen Stellung im Fahrwerk weiter optimierbar.

Weitere Vorteile, Merkmale und Einzelheiten der Erfindung ergeben sich aus der nachfolgenden Beschreibung bevorzugter Ausführungsbeispiele sowie an Hand der Zeichnungen. Diese zeigen in:
- Fig. 1:: eine schematische, perspektivische Darstellung der erfindungsgemäßen Vorrichtung ohne Säaggregate in einer Arbeitsstellung,
- Fig. 2:: eine perspektivische Darstellung gemäß Figur 1 während der Überfahrt über eine Bodenerhebung an der in Fahrtrichtung F linken Seite der Vorrichtung,
- Fig. 3:: eine perspektivische Ansicht der erfindungsgemäßen Vorrichtung mit vom Boden über Laufräder abgehobenen Säaggregaten (Vorgewendestellung),
- Fig. 4:: eine perspektivische Ansicht der erfindungsgemäßen Vorrichtung beim Absenken des Fahrwerks kurz vor Beginn der Klappung der Seitenrahmen,
- Fig. 5:: eine perspektivische Darstellung der erfindungsgemäßen Vorrichtung beim Klappen der Seitenrahmen und
- Fig. 6:: eine perspektivische Ansicht der erfindungsgemäßen Vorrichtung in eingeklapptem Zustand, also in Transportstellung.

In den Figuren sind gleiche Bauteile und Bauteile mit der gleichen Funktion mit den gleichen Bezugszeichen gekennzeichnet.

Der grundsätzliche Aufbau einer gattungsgemäßen Vorrichtung zum Verteilen von Saatgut und/oder Dünger, im Folgenden der Einfachheit halber als Verteilmaschine bezeichnet, wird nicht im Detail beschrieben und wird als bekannt vorausgesetzt. Die Fahrtrichtung F der Verteilmaschine ist in der Zeichnungsebene der Figuren nach links oben, wobei die Verteilmaschine im beschriebenen Ausführungsbeispiel als an einer Zugmaschine 100 angehängte Einzelkornsämaschine ausgebildet ist.

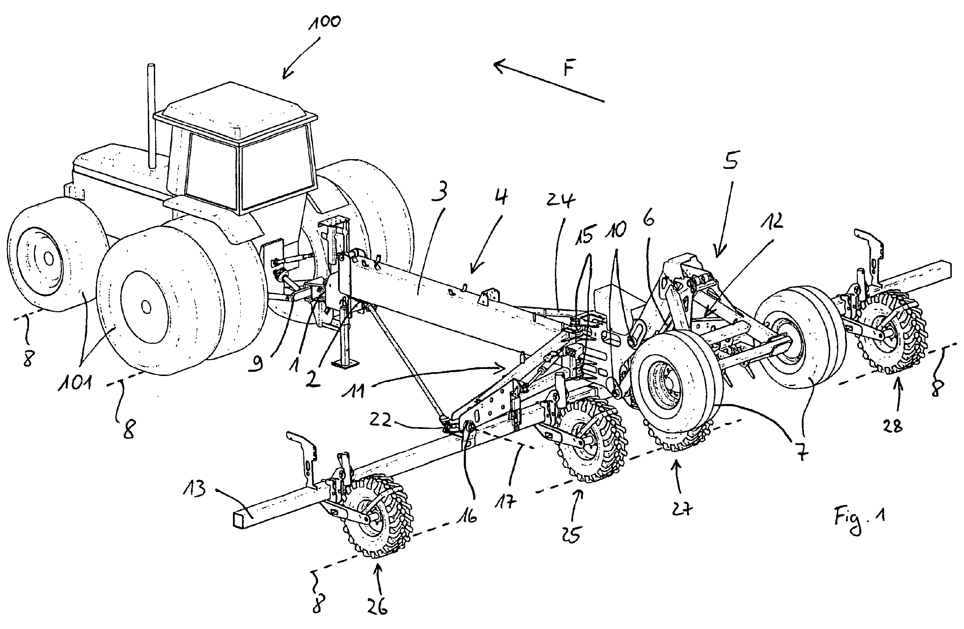

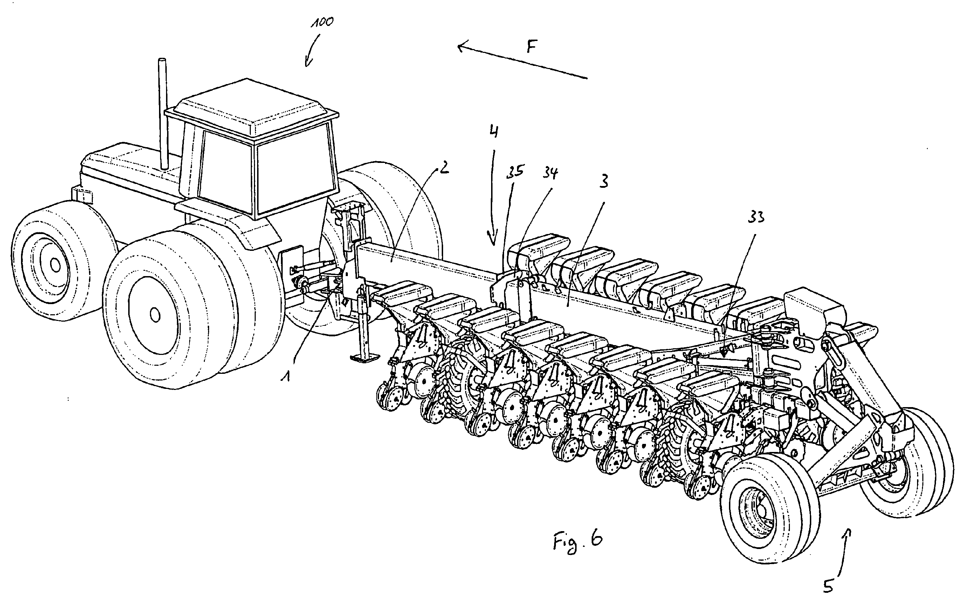

In Figur 1 ist die Verteilmaschine in einer Arbeitsstellung gezeigt, wobei die Verteilmaschine in einem Koppelpunkt 1 schwenkbar an der Zugmaschine 100 gekoppelt ist. Der Koppelpunkt 1 ist an einem in Figur 1 überwiegend von einem Aufnahmeteil 3 verdeckten Koppelteil 2, die gemeinsam einen Hauptrahmen 4 bilden, angeordnet. Der Hauptrahmen 4 ist teleskopierbar, indem das das Koppelteil 2 mit Spiel umschließende Aufnahmeteil 3 in Fahrtrichtung F hin und her verschoben wird. Die minimale Länge hat der Hauptrahmen 4 in einer in Figur 1 gezeigten Arbeitsstellung, woraus sich der Vorteil einer guten Wendigkeit der Vorrichtung beim Bearbeiten des Feldes, insbesondere auf dem Vorgewende, ergibt. Die maximale Länge hat der Hauptrahmen 4 in einer in Figur 6 gezeigten Transportstellung.

An dem Hauptrahmen 4 beziehungsweise dem Aufnahmeteil 3 ist am in Fahrtrichtung F hinteren Ende ein Fahrwerk 5 mit einer in Figur 1 gezeigten Sästellung und einer in Figur 6 gezeigten oberen Stellung angebracht. Das Fahrwerk 5 wird durch einen Hydraulikzylinder 6 mittels einer Hydrauliksteuerung von der Sästellung in die obere Stellung gefahren, wobei das Fahrwerk in seiner Sästellung bezogen auf den Hauptrahmen 4 nach oben geschwenkt ist, so dass Räder 7 des Fahrwerks 5 keinen Kontakt zu dem Ackerboden 8 haben. In der oberen Stellung ist der Hauptrahmen 4 durch das Fahrwerk 5 angehoben, wobei der Hauptrahmen 4 in seinem in Fahrtrichtung F vorderen Ende um ein Koppelgelenk 9 schwenkbar ist und an seinem hinteren Ende über Fahrwerksgelenke 10 mit dem Fahrwerk 5 gekoppelt ist. In der oberen Stellung wird der Ackerboden 8 nur noch von Reifen 101 der Zugmaschine 100 und den Rädern 7 berührt, so dass die Zugmaschine 100 mit der Verteilmaschine frei fahren kann.

An dem Aufnahmeteil 3 sind am hinteren Ende des Hauptrahmens 4 zwei Zwischenrahmen 11, 12 zur Aufnahme je eines Seitenrahmens 13, 14 schwenkbar angebracht, wobei der Zwischenrahmen 11 mit dem Seitenrahmen 13 einen Seitenarm 36 und der Zwischenrahmen 12 mit dem Seitenrahmen 14 einen Seitenarm 37 bildet. Die beiden Seitenrahmen 13, 14 sind unabhängig voneinander nach dem Balkenwaagenprinzip bewegbar.

Der in Fahrtrichtung linke Zwischenrahmen 11 und der an diesem angebrachte linke Seitenrahmen 13 sind in der in Figur 1 dargestellten Arbeitsstellung fluchtend mit dem in Fahrtrichtung F rechten Zwischenrahmen 12 und dem an dem rechten Zwischenrahmen 12 angebrachten rechten Seitenrahmen 14, und zwar quer zur Fahrtrichtung F. Die Seitenrahmen 13, 14 sind im Wesentlichen parallel zu Ackerboden 8 angeordnet. Die Funktionalität und Kinematik des linken Zwischenrahmens 11 und des linken Seitenrahmens 13 entspricht der des rechten Zwischenrahmens 12 und des rechten Seitenrahmens 14, so dass deren Aufbau, Funktionalität und Kinematik anhand der in den Figuren besser erkennbaren linken Zwischenrahmen 11 und linken Seitenrahmen 13 erläutert wird.

Durch die Zwischenrahmen 11, 13 sind in Richtung des Ackerbodens 8 oder auch entgegengesetzt an dem Seitenrahmen 13, 14 wirkenden Kräfte auf den Hauptrahmen 4 übertragbar.

Der linke Zwischenrahmen 11 ist durch ein Klappgelenk 15 mit einer im wesentlichen senkrecht zum Ackerboden 8 ausgerichteten Rotationsachse gegenüber dem Hauptrahmen 4 beziehungsweise dem Aufnahmeteil 3 schwenkbar, wobei die Schwenkbewegung von der in Figur 1 gezeigten Arbeitsstellung bis in die in Figur 6 gezeigte Transportstellung begrenzt ist. Das Klappgelenk 15 ist vorzugsweise unmittelbar am Hauptrahmen 4 bis maximal 1/8 der Länge des Seitenrahmens 13 entfernt vom Hauptrahmen 4 angeordnet.

Der Zwischenrahmen 11 erstreckt sich über 1/3 bis 2/3 der Länge des Seitenrahmens 13, vorzugsweise bis etwa, insbesondere genau, zur Hälfte des Seitenrahmens 13, wie beim in den Figuren gezeigten Ausführungsbeispiel. An dem vom Hauptrahmen 4 entfernten Ende des Zwischenrahmens 11 ist der Seitenrahmen 13 über ein Seitenrahmengelenk 16 schwenkbar gegenüber dem Zwischenrahmen 11 gelagert, wobei die Schwenkachse 17 des Seitenrahmengelenks 16 in etwa in Fahrtrichtung F verläuft, also quer zur Rotationsachse des Klappgelenks 15.

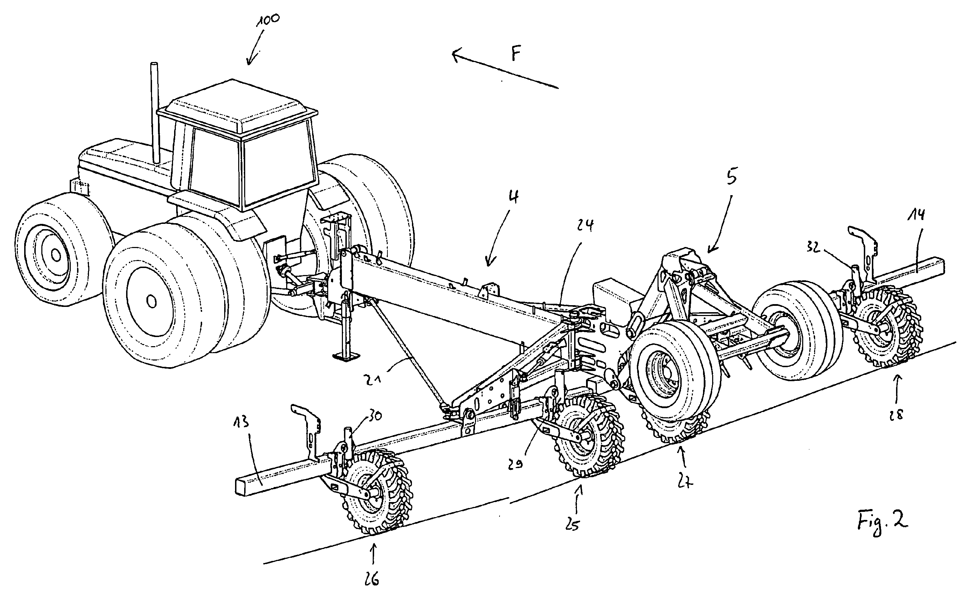

Somit lässt das Seitenrahmengelenk 16 ein Schwenken des Seitenrahmens 13 beim Überfahren einer Bodenunebenheit zu, wie es in Figur 2 gezeigt ist. Gleichzeitig wird der Seitenrahmen 13 über den Zwischenrahmen 11 optimal mit einer zum Ackerboden 8 gerichteten Druckkraft beaufschlagt, damit zu jedem Zeitpunkt, also auch bei Befahren einer Bodenunebenheit wie in Figur 2, ein optimaler Schardruck an Säscharen von Säaggregaten 19 gewährleistet ist. Im Ausführungsbeispiel nimmt jeder Seitenrahmen 13, 14 acht Säaggregate 19 auf. Jedes der Aggregate verfügt über einen Vorratstank 20 für das zu verteilende Saatgut.

Im Bereich des Seitenrahmengelenks 16 ist am Zwischenrahmen 11 eine Stange 21 über ein Stangengelenk 22 angelenkt, wobei die Stange 21 an ihrem gegenüberliegenden Ende an dem Koppelteil 2 über ein zweites Stangengelenk 23 angelenkt ist. Auf gleiche Art und Weise ist eine Stange 24 für das Einklappen des rechten Seitenrahmens 14 vorgesehen.

Der linke Seitenrahmen 13 weist ein inneres Laufrad 25 und ein äußeres Laufrad 26 auf. Ebenso weist der rechte Seitenrahmen 14 ein inneres Laufrad 27 und ein äußeres Laufrad 28 auf.

Das innere Laufrad 25 ist in einem in Arbeitsstellung zum Hauptrahmen 4 gerichteten ersten Drittel des Seitenrahmens 11 angeordnet, während das äußere Laufrad 26 in einem vom Hauptrahmen 4 entfernten dritten Drittel angeordnet ist. Erfindungsgemäß ist das Seitenrahmengelenk 16 zwischen dem inneren Laufrad 25 und dem äußeren Laufrad 26, insbesondere in einem zweiten Drittel des Seitenrahmens 11 angeordnet.

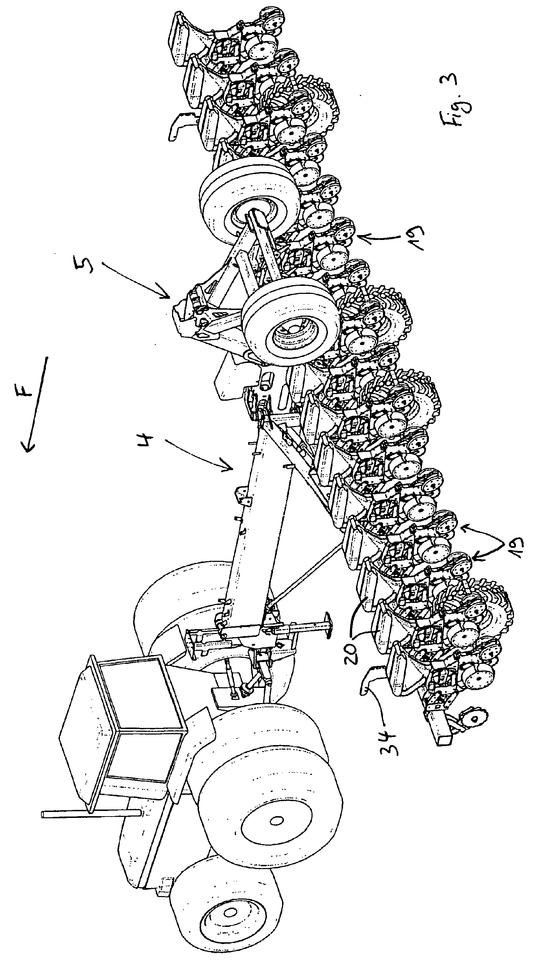

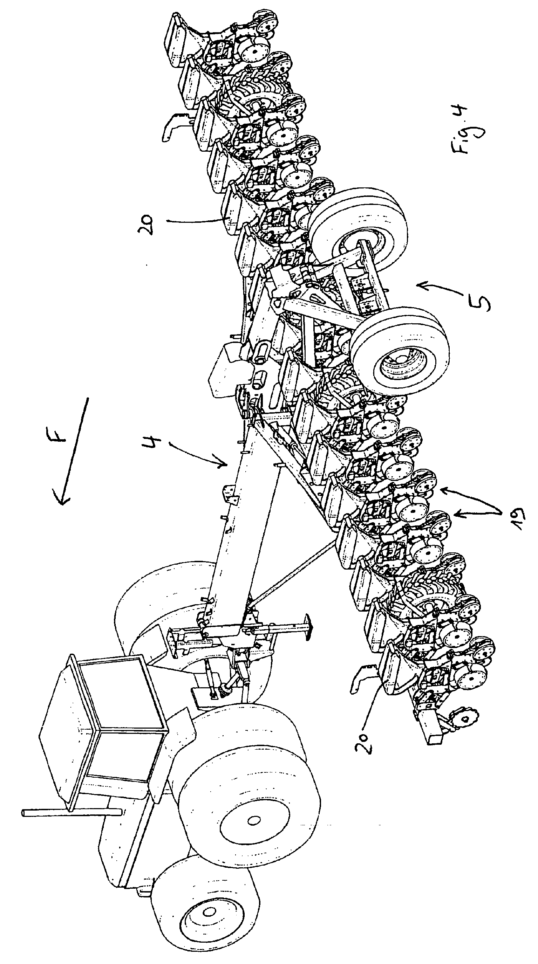

Die Laufräder 25, 26, 27, 28 sind über Hydraulikzylinder 29, 30, 31, 32 gegenüber dem jeweiligen Seitenrahmen 11, 13 höhenverstellbar, so dass über die Laufräder 25, 26, 27, 28 die Höhe der jeweiligen Seitenrahmen zum Boden einstellbar ist (siehe Figur 4). Darüber hinaus ist über die Hydraulikzylinder 29, 30, 31 (nicht gezeigt, analog 29), 32 die in Figur 3 gezeigte angehobene Stellung der Seitenrahmen 13, 14 einstellbar, um am Feldrand, also auf dem Vorgewende, ein Drehen der Verteilmaschine, beispielsweise um 180 Grad, zu ermöglichen, um die nächste Spur zu säen. Einer durch die Säaggregate 19 aufgebrachten Kraft, durch welche die Seitenrahmen 13, 14 angehoben werden können, wirkt bei der erfindungsgemäßen Ausgestaltung die gesamte, über die Zwischenrahmen 11, 12 vom Hauptrahmen auf die Seitenrahmen 13, 14 übertragene Gewichtskraft entgegen. An jedem Seitenrahmen 13, 14 können jeweils zwischen den Laufrädern 26, 26 und 27, 28 weitere Laufräder vorgesehen sein.

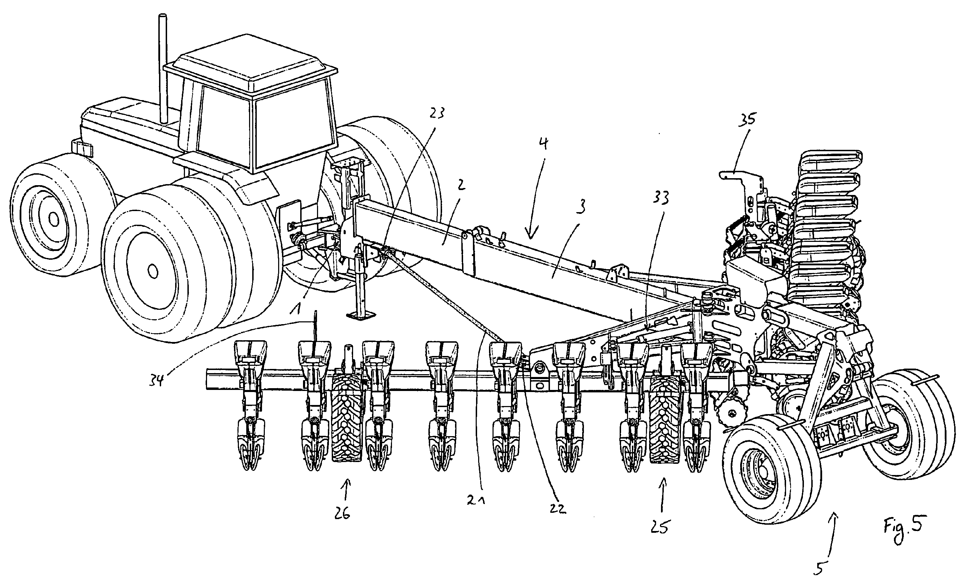

In Figur 4 wechselt die Verteilmaschine durch Absenken des Fahrwerks 5 und durch Anheben der Laufräder 25, 26, 27, 28 in die obere Stellung des Fahrwerks 5, so dass bei Erreichen der in Figur 4 gezeigten Position der regenschirmartige Klappmechanismus gemäß Figuren 5 und 6 ablaufen kann.

Hierzu wird der Zwischenrahmen 11 durch Klappmittel, vorliegend eine Klapphydraulik 33, eingeklappt, indem das vom Hauptrahmen 4 entfernte Ende des Zwischenrahmens 11 in Fahrtrichtung F zum Hauptrahmen 4 geklappt wird. Dabei klappt der am Zwischenrahmen 11 angebrachte Seitenrahmen 13 mit den Säaggregaten 19 mit ein und die starre Stange 21 bewirkt, dass sich der Hauptrahmen 4 durch Verschieben des Koppelteils 2 gegenüber dem Aufnahmeteil 3 verlängert, bis die in Figur 6 gezeigte Position erreicht ist.

Eine der Klapphydraulik 33 entsprechende Klapphydraulik ist auch für den rechten Zwischenrahmen 12 vorgesehen.

Da beide Stangen 21 am Koppelteil 2 zusammenlaufen und sich so beim Einklappen gleichzeitig nach vorne bewegen, wird eine Zwangssteuerung realisiert, die ein synchrones Einklappen des linken und rechten Seitenarms 36, 37 bewirkt.

Zur Stabilisierung des linken Seitenrahmens 13 beim Transport ist in einem vom Seitenrahmengelenk 16 entfernten Abschnitt eine Halterung 34 vorgesehen. Die Halterung 34 ist L-förmig ausgebildet und greift in der in Figur 6 gezeigten Transportstellung auf den Hauptrahmen 4, insbesondere das Koppelteil 2.

Eine Halterung 35 ist analog für den rechten Seitenrahmen 14 vorgesehen.

### Bezugszeichenliste

- F: Fahrtrichtung
- 1: Koppelpunkt
- 2: Koppelteil
- 3: Aufnahmeteil
- 4: Hauptrahmen
- 5: Fahrwerk
- 6: Hydraulikzylinder
- 7: Räder
- 8: Ackerboden
- 9: Koppelgelenk
- 10: Fahrwerksgelenke
- 11: linker Zwischenrahmen
- 12: rechter Zwischenrahmen
- 13: linker Seitenrahmen
- 14: rechter Seitenrahmen
- 15: Klappgelenk
- 16: Seitenrahmengelenk
- 17: Schwenkachse
- 19: Säaggregate
- 20: Vorratstank
- 21: Stange
- 22: Stangengelenk
- 23: Stangengelenk
- 24: Stange
- 25: inneres Laufrad
- 26: äußeres Laufrad
- 27: inneres Laufrad
- 28: äußeres Laufrad
- 29, 30,: Hydraulikzylinder
- 31, 32 33: Klapphydraulik
- 34: Halterung
- 35: Halterung
- 36: Seitenarm
- 37: Seitenarm
- 100: Zugmaschine
- 101: Reifen

## Patentansprüche

1. Vorrichtung zum Verteilen von Saatgut und/oder Dünger zur Einbringung von Saatgut und/oder Dünger in einen Ackerboden mit folgenden Merkmalen:
- ein ein in Fahrtrichtung F vorne angeordnetes Koppelteil (2) und ein gegenüber dem Koppelteil (2) in Fahrtrichtung F gleitend geführtes Aufnahmeteil (3) umfassender Hauptrahmen (4),
- zwei quer zur Fahrtrichtung F anordnenbare, jeweils durch eine Stange (21, 24) mit dem Koppelteil (2) gekoppelte Seitenarme (36, 37) zur Aufnahme jeweils mehrerer Säaggregate (19) an Seitenrahmen 13, 14) der Seitenarme (36, 37), wobei die Seitenrahmen (13, 14) jeweils ein inneres Laufrad (25, 27) und ein äußeres Laufrad (26, 28) aufweisen,
- zwei jeweils durch ein am Aufnahmeteil (3) angeordnetes Klappgelenk (15) mit dem Aufnahmeteil (3) schwenkbar gekoppelte Zwischenrahmen (11, 12) der Seitenarme (36, 37) zum Einklappen der Seitenarme (36, 37) von einer Arbeitsstellung in eine Transportstellung, **dadurch gekennzeichnet**
**dass** die Zwischenrahmen (11, 12) zur Beaufschlagung des jeweiligen Seitenrahmens (13, 14) in Richtung der Säaggregate (19) jeweils mit einem quer zum Klappgelenk (15) wirkenden, zwischen dem inneren und äußeren Laufrad (25, 26, 27, 28) angeordneten Seitenrahmengelenk (16) mit dem jeweiligen Seitenrahmen (13, 14) schwenkbar gekoppelt sind.

2. Vorrichtung nach Anspruch 1, **dadurch gekennzeichnet,**
**dass** die Seitenrahmengelenke (16) jeweils im Bereich des Schwerpunkts des korrespondierenden Seitenrahmens (13, 14), insbesondere mit den am jeweiligen Seitenrahmen (13, 14) angeordneten Säaggregaten (19), angeordnet sind.

3. Vorrichtung nach einem der vorhergehenden Ansprüche, **dadurch gekennzeichnet,**
**dass** der Hauptrahmen (4) teleskopartig ausgebildet ist.

4. Vorrichtung nach einem der vorhergehenden Ansprüche, **dadurch gekennzeichnet,**
**dass** in Fahrrichtung F hinter dem Hauptrahmen (4) ein am Hauptrahmen (4) angebrachtes Fahrwerk (5) zum Ausheben der Vorrichtung von einer Sästellung in eine obere Stellung vorgesehen ist.

5. Vorrichtung nach einem der vorhergehenden Ansprüche, **dadurch gekennzeichnet,**
**dass** die Vorrichtung eine Arbeitsbreite von mindestens 6m, insbesondere mindestens 9m, vorzugsweise mindestens 12m aufweist.

6. Vorrichtung nach einem der vorhergehenden Ansprüche, **dadurch gekennzeichnet,**
**dass** zwischen den beiden Seitenrahmen (13, 14) ein direkt am Aufnahmeteil (3) fixierter Mittelrahmen zur Aufnahme von Säaggregaten (19) vorgesehen ist.

7. Vorrichtung nach einem der vorhergehenden Ansprüche, **dadurch gekennzeichnet,**
**dass** zwischen dem Aufnahmeteil (3) und den Zwischenrahmen (11, 12) jeweils Klappmittel, insbesondere Hydraulikzylinder (33), zur Klappung der jeweils korrespondierenden Seitenrahmen (13, 14) von der Betriebsstellung in die Transportstellung und umgekehrt vorgesehen sind.

8. Vorrichtung nach einem der vorhergehenden Ansprüche, **dadurch gekennzeichnet,**
**dass** die Stangen (21, 24) jeweils an dem korrespondierenden Seitenarm (36, 37) im Bereich des jeweiligen Seitenrahmengelenks (16) angelenkt sind.

9. Vorrichtung nach einem der vorhergehenden Ansprüche, **dadurch gekennzeichnet,**
**dass** die Stangen (21, 24) jeweils im Bereich eines Koppelpunkts (1) des Koppelteils (2) mit einer Zugmaschine (100) angelenkt sind.

10. Vorrichtung nach Anspruch 4, **dadurch gekennzeichnet,**
**dass** das Fahrwerk (5) einen Positionssensor zur Erkennung der Sästellung und/oder der oberen Stellung umfasst.

11. Vorrichtung nach einem der vorhergehenden Ansprüche, **dadurch gekennzeichnet,**
**dass** auf dem Hauptrahmen (4) ein Vorratsbehälter zur Aufnahme von Saatgut oder Dünger vorgesehen ist.

## Claims

1. A device for distributing seed and/or fertilizer for seeding and/or fertilizing a field with the following features;
- a coupling part (2) which is located forward in the direction of travel F and a main frame (4) which comprises a holding part (3) which is guided to slide relative to the coupling part (2) in the direction of travel F,
- two side arms (36, 37) which are each coupled by a bar (21, 24) to the coupling part (2) and which can be located transversely to the direction of travel F for accommodating several sowing sets (19) on the side frames (13, 14) of the side arms (36, 37), the side frames (13, 14) each having an inner running wheel (25, 27) and an outer running wheel (26, 28),
- two intermediate frames (11, 12) of the side arms (36, 37), which frames are pivotally coupled to the holding part (3) by a hinged joint (15) located on the holding part (3) for folding the side arms (36, 37) from a working position into a transport position,
**characterized in that**
the intermediate frames (11, 12) for acting on the respective side frame (13, 14) in the direction of the sowing sets (19) are each pivotally coupled to the respective side frame (13, 14) with a side frame joint (16) which is located between the inner and outer running wheel (25, 26, 27, 28) and which acts transversely to the hinged joint (15).

2. The device as claimed in Claim 1, wherein the side framejoints (16) are each located in the region of the center of gravity of the corresponding side frame (13, 14), especially with the sowing sets (19) which are located on the respective side frame (13, 14),

3. The device as claimed in one of the preceding claims, wherein the main frame (4) is made telescoping.

4. The device as claimed in one of the preceding claims, wherein in the direction of travel F behind the main frame (4) there is running gear (5) attached to the main frame (4) for lifting the device from a sowing position into an upper position.

5. The device as claimed in one of the preceding claims, wherein the device has a working width of at least 6 m, especially at least 9 m, preferably at least 12 m.

6. The device as claimed in one of the preceding claims, wherein between the two side frames (13, 14) there is a middle frame which is fixed directly on the holding part (3) for accommodation of sowing sets (19).

7. The device as claimed in one of the preceding claims, wherein between the holding part (3) and the intermediate frame (11, 12) there are folding means, especially hydraulic cylinders (33) for folding the respectively corresponding side frames (13, 14) from the operating position into the transport position and vice versa.

8. The device as claimed in one of the preceding claims, wherein the bars (21, 24) are each coupled to the corresponding side arm (36, 37) in the region of the respective side frame joint (16),

9. The device as claimed in one of the preceding claims, wherein the bars (21, 24) are each coupled in the region of a coupling point (1) of the coupling part (2) to a tractor (100).

10. The device as claimed in Claim 4, wherein the running gear (5) comprises a position sensor for detecting the sowing position and/or the upper position.

11. The device as claimed in one of the preceding claims, wherein there is a storage tank for holding seed or fertilizer on the main frame (4).

## Revendications

1. Dispositif de distribution de semences et/ou d'engrais pour enfouir des semences et/ou des engrais dans un sol cultivé, avec les caractéristiques suivantes :
- une pièce d'accouplement (2) disposée à l'avant dans la direction de conduite F et un châssis principal (4) comprenant une pièce de réceptacle (3) guidée par coulissement par rapport à la pièce d'accouplement (2) dans la direction de conduite F,
- deux bras latéraux (36, 37) pouvant être disposés transversalement à la direction de conduite F, respectivement couplé par une barre (21, 24) à la pièce d'accouplement (2) afin de recevoir plusieurs groupes de semoir (19) respectifs sur le châssis latéral (13, 14) des bras latéraux (36, 37), dans lequel les châssis latéraux (13, 14) présentent respectivement une roue intérieure (25, 27) et une roue extérieure (26, 28),
- deux châssis intermédiaires (11, 12) des bras latéraux (36, 37) respectivement couplés de manière pivotante avec la pièce de réceptacle (3) par un joint à rotule (15) disposé sur la pièce de réceptacle (3), afin de rabattre les bras latéraux (36, 37) d'une position de travail à une position de transport, **caractérisé en ce que**
les châssis intermédiaires (11, 12) afin de solliciter le châssis latéral respectif (13, 14) dans la direction des groupes de semoir (19) sont respectivement couplés de manière pivotante au châssis latéral respectif (13, 14) par un joint articulé de châssis latéral (16) agissant transversalement au joint à rotule (15), disposé entre la roue intérieure et la roue extérieure (25, 26, 27, 28).

2. Dispositif selon la revendication 1, **caractérisé en ce que**
les joints articulés de châssis latéral (16) sont disposés respectivement au niveau du centre de gravité du châssis latéral correspondant (13, 14), notamment avec les groupes de semoir (19) disposés sur le châssis latéral respectif (13, 14).

3. Dispositif selon une des revendications précédentes, **caractérisé en ce que**
le châssis principal (4) est configuré de manière télescopique.

4. Dispositif selon une des revendications précédentes, **caractérisé en ce que**
un train de roulement (5) monté sur châssis principal (4) derrière le châssis principal (4) dans la direction de conduite F est prévu afin de soulever 1e dispositif d'une position de semage à une position supérieure.

5. Dispositif selon une des revendications précédentes, **caractérisé en ce que**
le dispositif présente une largeur de travail d'au moins 6 m, notamment d'au moins 9 m, de préférence d'au moins 12 m.

6. Dispositif selon une des revendications précédentes, **caractérisé en ce que**
entre les deux châssis latéraux (13, 14) un châssis central fixé sur la pièce de réceptacle (3) est prévu afin de recevoir des groupes de semoir (19).

7. Dispositif selon une des revendications précédentes, **caractérisé en ce que**
entre la pièce de réceptacle (3) et le châssis intermédiaire (11, 12) des moyens de repliage respectifs, notamment un vérin hydraulique (33), pour replier les châssis hydrauliques respectivement correspondants (13, 14) de la position de fonctionnement à la position de transport et inversement sont prévus.

8. Dispositif selon une des revendications précédentes, **caractérisé en ce que**
les barres (21, 24) sont respectivement articulées sur le bras latéral correspondant (36, 37) au niveau du joint articulé de châssis latéral (16) respectif.

9. Dispositif selon une des revendications précédentes, **caractérisé en ce que**
les barres (21, 24) sont respectivement articulées avec une machine de traction (100) au niveau d'un point d'accouplement (1) de la pièce d'accouplement (2) .

10. Dispositif selon la revendication 4, **caractérisé en ce que**
le train de roulement (5) comprend un capteur de position pour reconnaître la position du semoir et/ou la position supérieure.

11. Dispositif selon une des revendications précédentes, **caractérisé en ce que**
un récipient de stockage pour recevoir des semences ou des engrais est prévu sur le châssis principal (4).
